# FASCICULE DE BREVET EUROPEEN

(11) **EP 2 298 604 B1**
(45) Date de publication et mention de la délivrance du brevet: **30.08.2017**
(21) Numéro de dépôt: 10175385.3
(22) Date de dépôt: 06.09.2010
(51) Int. Cl.: B60Q 1/14, B60Q 1/44

(54) **Dispositif d'éclairage et/ou de signalisation d'un véhicule automobile**
Vorrichtung zur Beleuchtung und/oder Signalisierung eines Kraftfahrzeugs
Lighting and/or signalling device for an automobile

(30) Priorité: 10.09.2009 FR 0956187
(43) Date de publication de la demande: 23.03.2011
(73) Titulaire: VALEO VISION, 93012 Bobigny (FR)
(72) Inventeur: Dubosc, Christophe, 93250 VILLEMOMBLE (FR)

(56) Documents cités:
- EP-A2- 0 697 310
- DE-U1- 29 705 183
- US-A- 5 680 098
- US-A1- 2003 160 573
- US-A1- 2006 170 379

## Description

L'invention concerne notamment un dispositif d'éclairage et/ou de signalisation d'un véhicule automobile.

Dans des dispositifs d'éclairage et/ou de signalisation d'un certain type, la source de lumière comprend une lampe halogène ou à incandescence.

Or ce type de lampe présente la particularité de s'allumer, à froid, avec un temps de retard non négligeable.

Par exemple ce temps peut être voisin de 0.2 seconde.

Dans le cas où ce type de lampe est utilisé pour réaliser une fonction de feu Stop, ce temps d'allumage entraîne un retard dans la perception de la signalisation Stop pour un véhicule suiveur. Un dispositif d'éclairage et/ou de signalisation selon le préambule de la revendication 1 est connu du document US 2006/0170379.

Il existe un besoin pour minimiser le temps de réaction d'un conducteur dans un véhicule suiveur en cas de freinage.

L'invention vise notamment à répondre à ce besoin.

L'invention a ainsi pour objet un dispositif d'éclairage et/ou de signalisation d'un véhicule automobile, ce dispositif comportant :
- au moins une première source de lumière associée à une première fonction d'éclairage et/ou de signalisation et présentant un premier temps d'allumage caractéristique,
- au moins une deuxième source de lumière associée à une deuxième fonction d'éclairage et/ou de signalisation, différente de la première, et présentant un deuxième temps d'allumage caractéristique, ce deuxième temps d'allumage étant supérieur au premier,
- une unité de commande agencée pour, lorsqu'elle reçoit un ordre d'allumage de la deuxième source de lumière, activer la première source de lumière, momentanément, de sorte que, durant le temps d'allumage de la deuxième source de lumière, la première source de lumière émette une lumière d'intensité augmentée, proche de ou supérieure à une intensité nominale de la deuxième source de lumière, permettant ainsi de compenser le temps d'allumage de la deuxième source de lumière.

Grâce à l'invention, il est possible de produire, de manière sensiblement instantanée, une signalisation provisoire, par exemple un feu Stop, avant que la véritable signalisation (feu Stop) ne s'établisse.

Il est ainsi possible de compenser le retard d'allumage de la véritable signalisation et maximiser le temps de réaction d'un conducteur dans un véhicule suiveur.

L'invention est en outre relativement simple à mettre en oeuvre du fait que l'on profite, pour produire la signalisation provisoire, d'une source de lumière utilisée, à titre principal, pour une autre fonction photométrique. Ceci permet d'éviter l'ajout de matériel spécifique important pour compenser le retard d'allumage de la fonction de signalisation.

Par exemple, la première source de lumière comporte au moins une LED (diode électroluminescente), notamment une pluralité de LED, et la deuxième source de lumière comporte au moins une lampe halogène ou une lampe à incandescence.

Dans un exemple de mise en oeuvre de l'invention, le deuxième temps d'allumage est supérieur à au moins deux fois ou dix fois le premier temps d'allumage, ce deuxième temps d'allumage étant notamment supérieur à 0.1 seconde, étant par exemple sensiblement égal à 0.2 seconde.

Avantageusement la première fonction de signalisation correspond à un feu de position du véhicule automobile.

Le cas échéant, la deuxième fonction de signalisation correspond à un feu Stop du véhicule automobile.

L'unité de commande est de préférence agencée pour activer la première source de lumière, en compensation du deuxième temps d'allumage de la deuxième source, en commandant une émission, par la première source, de lumière d'intensité supérieure à son intensité nominale, par exemple en survoltant cette première source.

Dans un exemple de mise en oeuvre de l'invention, l'unité de commande est agencée pour activer la première source de lumière, en compensation du deuxième temps d'allumage de la deuxième source, lorsque la première source est initialement allumée (mode nuit).

Dans un autre exemple de mise en oeuvre de l'invention, l'unité de commande est agencée pour activer la première source de lumière, en compensation du deuxième temps d'allumage de la deuxième source, lorsque la première source est initialement éteinte (mode jour).

Si on le souhaite, l'unité de commande est agencée pour activer la première source de lumière, en compensation du deuxième temps d'allumage de la deuxième source, seulement sensiblement durant le temps d'allumage de la deuxième source de lumière, cette activation cessant ensuite.

Dans un exemple de mise en oeuvre de l'invention, l'unité de commande est agencée pour activer la première source de lumière, en compensation du temps d'allumage de la deuxième source de lumière, de manière à ce que l'intensité de la lumière de la première source décroît avant que la deuxième source atteigne son intensité nominale.

Dans un autre exemple de mise en oeuvre de l'invention, l'unité de commande est agencée pour activer la première source de lumière, en compensation du temps d'allumage de la deuxième source de lumière, de manière à ce que l'intensité de la lumière de la première source reste sensiblement constante jusqu'à ce que la deuxième source atteigne son intensité nominale.

L'unité de commande peut comporter au moins une carte électronique.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en vue de face, un dispositif de signalisation selon un exemple de mise en oeuvre de l'invention,
- la figure 2 représente, schématiquement et partiellement, en vue de côté, le dispositif de signalisation de la figure 1, et
- les figures 3 à 6 illustrent schématiquement l'évolution de l'intensité lumineuse des sources de lumière en fonction du temps, selon différents exemples de mise en oeuvre de l'invention.

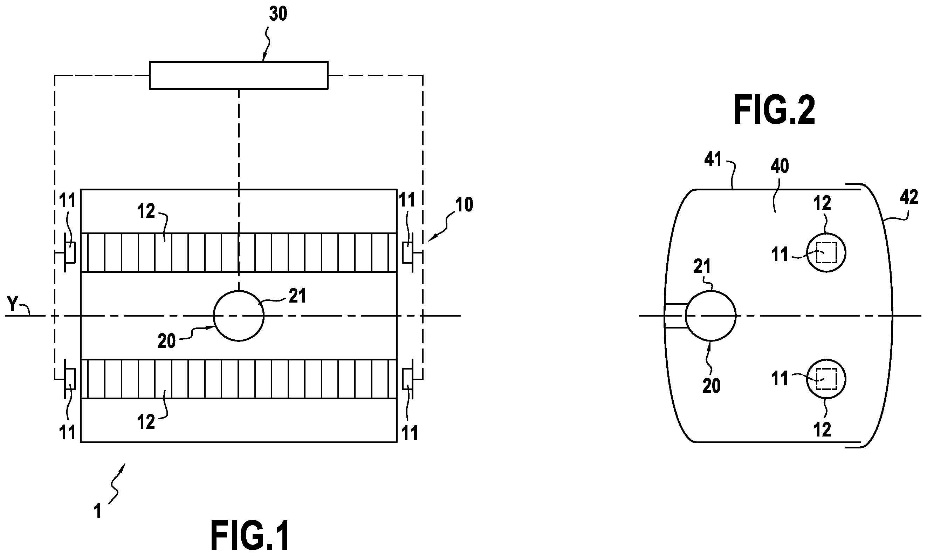

On a représenté sur la figure 1 un dispositif de signalisation 1 d'un véhicule automobile, ce dispositif comportant :
- une première source de lumière 10 associée à une première fonction de signalisation et présentant un premier temps d'allumage caractéristique,
- une deuxième source de lumière 20 associée à une deuxième fonction de signalisation et présentant un deuxième temps d'allumage caractéristique, ce deuxième temps d'allumage étant supérieur au premier,
- une unité de commande 30.

Dans l'exemple décrit, la première source de lumière 10 comporte une pluralité de LED 11, par exemple au nombre de quatre.

Ces LED 11 émettent la lumière dans des guides de lumière 12.

Ces deux guides de lumière 12, par exemple réalisés en matière plastique, présentent par exemple une forme sensiblement cylindrique de révolution d'axe Y.

La deuxième source de lumière 20 comporte une lampe à incandescence 21 disposée sensiblement entre les guides de lumière 12 parallèles.

Les guides de lumière 12 et la lampe 21 sont, dans l'exemple décrit, placés dans une enceinte 40 commune formée par un boîtier 41 et une glace 42, comme on peut le voir sur la figure 2.

La première fonction de signalisation correspond à un feu de position du véhicule automobile.

La deuxième fonction de signalisation correspond à un feu Stop du véhicule automobile.

L'unité de commande 30 comporte une carte électronique, non représentée.

Dans l'exemple décrit, le deuxième temps d'allumage est supérieur à au moins deux fois ou dix fois le premier temps d'allumage, ce deuxième temps d'allumage étant par exemple sensiblement égal à 0.2 seconde.

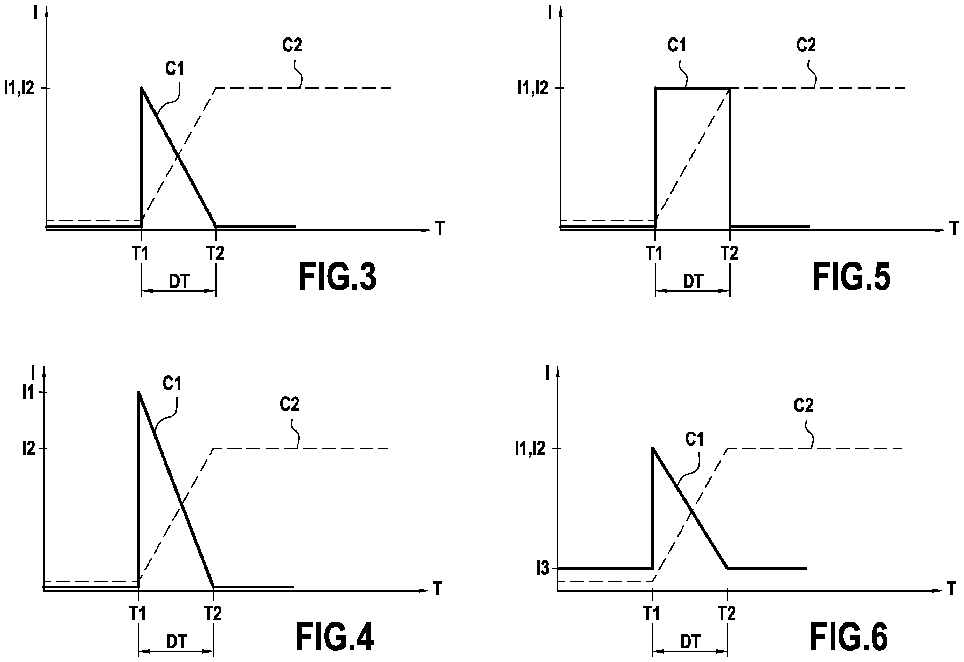

Comme on peut le voir sur la figure 3, l'unité de commande 30 est agencée pour, lorsqu'elle reçoit un ordre d'allumage de la deuxième source de lumière 20 (instant T1), activer la première source de lumière 10, momentanément (voir courbe C1), de sorte que, durant le temps d'allumage DT de la deuxième source de lumière 20 (voir courbe C2), la première source de lumière 10 émette une lumière d'intensité augmentée I1, sensiblement égale à une intensité nominale I2 de la deuxième source de lumière 20, permettant ainsi de compenser le temps d'allumage de la deuxième source de lumière 20.

T2 correspond à l'instant où la deuxième source 20 atteint son intensité nominale I2.

L'unité de commande 30 est agencée pour activer la première source de lumière 10, en compensation du deuxième temps d'allumage de la deuxième source 20, en commandant une émission, par la première source 10, de lumière d'intensité supérieure à son intensité nominale, par exemple en survoltant cette première source 10.

En mode jour, la première source de lumière 10 (feu de position) est éteinte en roulage normal, et l'unité de commande 30 est agencée pour activer cette première source de lumière 10, en compensation du deuxième temps d'allumage de la deuxième source 20.

Comme visible sur la figure 3, l'unité de commande 30 est agencée pour activer la première source de lumière 10, en compensation du deuxième temps d'allumage DT de la deuxième source 20, seulement sensiblement durant le temps d'allumage DT de la deuxième source de lumière, cette activation cessant ensuite.

Dans l'exemple décrit (figure 3), l'unité de commande 30 est agencée pour activer la première source de lumière 10, en compensation du temps d'allumage de la deuxième source de lumière 20, de manière à ce que l'intensité de la lumière de la première source 10 décroît avant que la deuxième source 20 atteigne son intensité nominale I2.

Dans un autre exemple de mise en oeuvre de l'invention (voir figure 5), l'unité de commande 30 est agencée pour activer la première source de lumière 10, en compensation du temps d'allumage de la deuxième source de lumière 20, de manière à ce que l'intensité de la lumière de la première source 10 reste sensiblement constante jusqu'à ce que la deuxième source 20 atteigne son intensité nominale I2.

En variante encore, comme on peut le voir sur la figure 4, l'unité de commande 30 est agencée pour, lorsqu'elle reçoit un ordre d'allumage de la deuxième source de lumière 20 (instant T1), activer la première source de lumière 10, momentanément (voir courbe C1), de sorte que, durant le temps d'allumage DT de la deuxième source de lumière 20 (voir courbe C2), la première source de lumière 10 émette une lumière d'intensité augmentée I1, supérieure à une intensité nominale I2 de la deuxième source de lumière 20, permettant ainsi de compenser le temps d'allumage de la deuxième source de lumière 20.

En mode nuit (voir figure 6), la première source de lumière 10 (feu de position) est allumée à une intensité nominale I3 en roulage normal.

L'intensité I3 est inférieure à celle nominale I2 de la deuxième source de lumière 20.

L'unité de commande 30 est agencée pour activer la première source de lumière 10 jusqu'à l'intensité I1, supérieure à I3, en compensation du deuxième temps d'allumage de la deuxième source 20.

## Revendications

1. Dispositif (1) d'éclairage et/ou de signalisation d'un véhicule automobile, ce dispositif comportant :
- au moins une première source de lumière (10) associée à une première fonction d'éclairage et/ou de signalisation et présentant un premier temps d'allumage caractéristique,
- au moins une deuxième source de lumière (20) présentant un deuxième temps d'allumage caractéristique, ce deuxième temps d'allumage étant supérieur au premier, **caractérisé en ce que**
- la deuxième source de lumière (20) est associée à une deuxième fonction d'éclairage et/ou se signalisation différente de la première fonction, et **en ce que**
- le dispositif comprend une unité de commande (30) agencée pour, lorsqu'elle reçoit un ordre d'allumage de la deuxième source de lumière, activer la première source de lumière, momentanément, de sorte que, durant le temps d'allumage de la deuxième source de lumière, la première source de lumière émette une lumière d'intensité augmentée (I1), proche de ou supérieure à une intensité nominale (I2) de la deuxième source de lumière, permettant ainsi de compenser le temps d'allumage de la deuxième source de lumière.

2. Dispositif selon la revendication précédente, **caractérisé par le fait que** la première source de lumière (10) comporte au moins une LED (11), notamment une pluralité de LED.

3. Dispositif selon l'une des revendications précédentes, **caractérisé par le fait que** la deuxième source de lumière (20) comporte au moins une lampe halogène ou une lampe à incandescence (21).

4. Dispositif selon l'une des revendications précédentes, **caractérisé par le fait que** la première fonction de signalisation correspond à un feu de position du véhicule automobile.

5. Dispositif selon l'une des revendications précédentes, **caractérisé par le fait que** la deuxième fonction de signalisation correspond à un feu Stop du véhicule automobile.

6. Dispositif selon l'une des revendications précédentes, **caractérisé par le fait que** l'unité de commande (30) est agencée pour activer la première source de lumière, en compensation du deuxième temps d'allumage de la deuxième source, en commandant une émission, par la première source, de lumière d'intensité supérieure à son intensité nominale, par exemple en survoltant cette première source.

7. Dispositif selon l'une des revendications précédentes, **caractérisé par le fait que** l'unité de commande (30) est agencée pour activer la première source de lumière, en compensation du deuxième temps d'allumage de la deuxième source, seulement sensiblement durant le temps d'allumage de la deuxième source de lumière, cette activation cessant ensuite.

8. Dispositif selon l'une des revendications précédentes, **caractérisé par le fait que** l'unité de commande (30) est agencée pour activer la première source de lumière, en compensation du temps d'allumage de la deuxième source de lumière, de manière à ce que l'intensité de la lumière de la première source décroît avant que la deuxième source atteigne son intensité nominale.

9. Dispositif selon l'une des revendications 1 à 7, **caractérisé par le fait que** l'unité de commande est agencée pour activer la première source de lumière, en compensation du temps d'allumage de la deuxième source de lumière, de manière à ce que l'intensité de la lumière de la première source reste sensiblement constante jusqu'à ce que la deuxième source atteigne son intensité nominale.

## Patentansprüche

1. Vorrichtung (1) zur Beleuchtung und/oder Signalisierung eines Automobilfahrzeugs, wobei diese Vorrichtung umfasst:
- mindestens eine erste Lichtquelle (10), die einer ersten Funktion zur Beleuchtung und/oder Signalisierung zugeordnet ist und eine erste charakteristische Beleuchtungszeit aufweist,
- mindestens eine zweite Lichtquelle (20), die eine zweite charakteristische Beleuchtungszeit aufweist, wobei diese zweite Beleuchtungszeit länger ist als die erste,
**dadurch gekennzeichnet, dass**
- die zweite Lichtquelle (20) einer zweiten Funktion zur Beleuchtung und/oder Signalisierung zugeordnet ist, die von der ersten Funktion verschieden ist,
und dadurch, dass
- die Vorrichtung eine Steuereinheit (30) umfasst, die eingerichtet ist, wenn sie einen Befehl zur Beleuchtung von der zweiten Lichtquelle empfängt, die erste Lichtquelle momentan derart zu aktivieren, dass, während der Beleuchtungszeit der zweiten Lichtquelle, die erste Lichtquelle ein Licht mit erhöhter Intensität (I1) emittiert, die nahe bei der oder größer als eine nominale Intensität (12) der zweiten Lichtquelle ist, wobei so die Beleuchtungszeit der zweiten Lichtquelle kompensiert wird.

2. Vorrichtung nach dem vorhergehenden Anspruch, **dadurch gekennzeichnet, dass** die erste Lichtquelle (10) mindestens eine LED (11), insbesondere mehrere LEDs, umfasst.

3. Vorrichtung nach einem der vorhergehenden Ansprüche, **dadurch gekennzeichnet, dass** die zweite Lichtquelle (20) mindestens eine Halogenlampe oder eine Glühlampe (21) umfasst.

4. Vorrichtung nach einem der vorhergehenden Ansprüche, **dadurch gekennzeichnet, dass** die erste Funktion zur Signalisierung einer Schlussleuchte des Automobilfahrzeugs entspricht.

5. Vorrichtung nach einem der vorhergehenden Ansprüche, **dadurch gekennzeichnet, dass** die zweite Funktion zur Signalisierung einer Bremsleuchte des Automobilfahrzeugs entspricht.

6. Vorrichtung nach einem der vorhergehenden Ansprüche, **dadurch gekennzeichnet, dass** die Steuereinheit (30) eingerichtet ist, die erste Lichtquelle zu aktivieren, in Kompensation der zweiten Beleuchtungszeit der zweiten Quelle, durch den Befehl für eine Emission, durch die erste Quelle, von Licht mit einer größeren Intensität als ihrer nominalen Intensität, beispielsweise durch das Erhöhen der Spannung dieser ersten Quelle.

7. Vorrichtung nach einem der vorhergehenden Ansprüche, **dadurch gekennzeichnet, dass** die Steuereinheit (30) eingerichtet ist, die erste Lichtquelle zu aktivieren, in Kompensation der zweiten Beleuchtungszeit der zweiten Quelle, im Wesentlichen nur während der Beleuchtungszeit der zweiten Lichtquelle, wobei diese Aktivierung anschließend beendet wird.

8. Vorrichtung nach einem der vorhergehenden Ansprüche, **dadurch gekennzeichnet, dass** die Steuereinheit (30) eingerichtet ist, die erste Lichtquelle zu aktivieren, in Kompensation der Beleuchtungszeit der zweiten Lichtquelle, damit die Intensität des Lichts der ersten Quelle abnimmt, bevor die zweite Quelle ihre nominale Intensität erreicht.

9. Vorrichtung nach einem der Ansprüche 1 bis 7, **dadurch gekennzeichnet, dass** die Steuereinheit eingerichtet ist, die erste Lichtquelle zu aktivieren, in Kompensation der Beleuchtungszeit der zweiten Lichtquelle, damit die Intensität des Lichts der ersten Quelle im Wesentlichen konstant bleibt, bis die zweite Quelle ihre nominale Intensität erreicht.

## Claims

1. Lighting and/or signalling device (1) of a motor vehicle, this device comprising:
- at least one first light source (10) associated with a first lighting and/or signalling function and exhibiting a first characteristic switch-on time,
- at least one second light source (20) exhibiting a second characteristic switch-on time, this second switch-on time being greater than the first,
**characterized in that**
- the second light source (20) is associated with a second lighting and/or signalling function different from the first function, and **in that**
- the device comprises a control unit (30) arranged to, when it receives an order to switch on the second light source, activate the first light source, momentarily, such that, during the switch-on time of the second light source, the first light source emits a light of augmented intensity (I1), close to or greater than a nominal intensity (12) of the second light source, thus making it possible to compensate for the switch-on time of the second light source.

2. Device according to the preceding claim, **characterized in that** the first light source (10) comprises at least one LED (11), notably a plurality of LEDs.

3. Device according to one of the preceding claims, **characterized in that** the second light source (20) comprises at least one halogen lamp or one incandescent lamp (21).

4. Device according to one of the preceding claims, **characterized in that** the first signalling function corresponds to a position light of the motor vehicle.

5. Device according to one of the preceding claims, **characterized in that** the second signalling function corresponds to a stop light of the motor vehicle.

6. Device according to one of the preceding claims, **characterized in that** the control unit (30) is arranged to activate the first light source, compensating for the second switch-on time of the second source, by commanding an emission, by the first source, of light of intensity greater than its nominal intensity, for example by boosting the voltage of this first source.

7. Device according to one of the preceding claims, **characterized in that** the control unit (30) is arranged to activate the first light source, compensating for the second switch-on time of the second source, only substantially for the switch-on time of the second light source, this activation then ceasing.

8. Device according to one of the preceding claims, **characterized in that** the control unit (30) is arranged to activate the first light source, compensating for the switch-on time of the second light source, such that the intensity of the light from the first source decreases before the second source reaches its nominal intensity.

9. Device according to one of Claims 1 to 7, **characterized in that** the control unit is arranged to activate the first light source, compensating for the switch-on time of the second light source, such that the intensity of the light from the first source remains substantially constant until the second source reaches its nominal intensity.
